# EUROPEAN PATENT APPLICATION

(11) **EP 1 187 486 A1**
(43) Date of publication of application: **13.03.2002**
(21) Application number: 01120411.2
(22) Date of filing: 27.08.2001
(51) Int. Cl.: H04N 7/173

(54) **Master/slave apparatus for receiving audiovisual programmes**

(30) Priority: 05.09.2000 FR 0011263
(71) Applicant: Thomson Licensing S.A., 92100 Boulogne-Billancourt (FR)
(72) Inventor: Bertin, Jean-Pierre, 44290 Guemene-Penfao (FR); Guitton, Xavier, 35760 Montgermont (FR); Lepoil, Philippe, 35135 Chantepie (FR)
(74) Representative: Kohrs, Martin

(57) **Abstract**

The present invention relates to an apparatus for receiving an audiovisual programme comprising a circuit for communication with means of connection to a bidirectional communication network, characterised in that the apparatus comprises
- a first connector for communication with a master apparatus;
- a second connector for communication with a peripheral apparatus;
- a means of transmission of a supply voltage on the first connector originating from the master apparatus;
- means of detection of the presence of the supply voltage on the first connector, the means of detection controlling a switching circuit for going from a master mode of operation of the apparatus in relation to the peripheral apparatus in the case of the absence of the voltage, and from a slave mode of operation in relation to the master apparatus when the voltage is present.

## Description

The present invention relates to an apparatus for receiving an audiovisual programme which can for example be linked to a personal computer and/or to at least one peripheral apparatus. The apparatus for receiving an audiovisual programme can, for example, consist of a decoder or any other audiovisual apparatus which can share resources.

Most digital decoders for cable television network will be equipped with a return pathway. This return pathway will be used in particular for functions of interactivity between the user of the decoded audio video programme and the operator of the television network. However, such decoders are not designed to be connected to master systems such as for example a personal computer or to peripheral apparatus such as a printer in order to utilize on the one hand all the resources of the decoder and, on the other hand, shared resources.

The object of the present invention is therefore to equip an apparatus for receiving an audiovisual programme, such as for example a digital decoder, with a device necessary to allow connection and communication with at least one apparatus.

This objective is achieved through an apparatus for receiving an audiovisual programme comprising a circuit for communication with means of connection to a bidirectional communication network, characterised in that the apparatus comprises
- a first connector for communication with a master apparatus;
- a second connector for communication with a peripheral apparatus;
- a means of transmission of a supply voltage on the first connector originating from the master apparatus;
- means of detection of the presence of the supply voltage on the first connector, the means of detection controlling a switching circuit for going from a master mode of operation of the apparatus in relation to the peripheral apparatus in the case of the absence of the voltage, and from a slave mode of operation in relation to the master apparatus when the voltage is present.

According to another feature, the first connector is a USB type client connector and each second connector is a USB type master connector.

According to another feature, the switching circuit comprises two inputs each linked to an input/output of a controller managing the transfer of data between the first or the second connector and a so-called main microprocessor of the apparatus, the switching circuit also comprises inputs/outputs allowing the connection of the first and second connectors so that either the first connector is linked to the inputs/outputs of the controller, or the second connector is linked to the inputs/outputs of the controller.

According to another feature, the means of detection are linked firstly to an input of the switching means, secondly to an input of the controller and thirdly to an input of the main microprocessor.

According to another feature, the master apparatus is a personal computer and the apparatus linked to the master apparatus comprises a digital decoder connected to the communication network so as to allow the computer to talk to said network.

According to another feature, the means of detection comprise a line transmitting either the supply voltage appearing on the first connector, or a signal representative of the appearance of the supply voltage on the first connector, to the switching means, the controller and the main microprocessor.

According to another feature, the peripheral apparatus or apparatuses are linked to the second connector of the apparatus by way of a splitter.

The invention, together with its characteristics and advantages, will emerge more clearly on reading the description given with reference to the appended drawings in which:
- Figures 1A and 1B represent a diagrammatic view of the possible connections between an apparatus according to the invention and a master apparatus and respectively at least one peripheral apparatus;
- Figure 2 represents a simplified circuit diagram of an apparatus according to the invention.

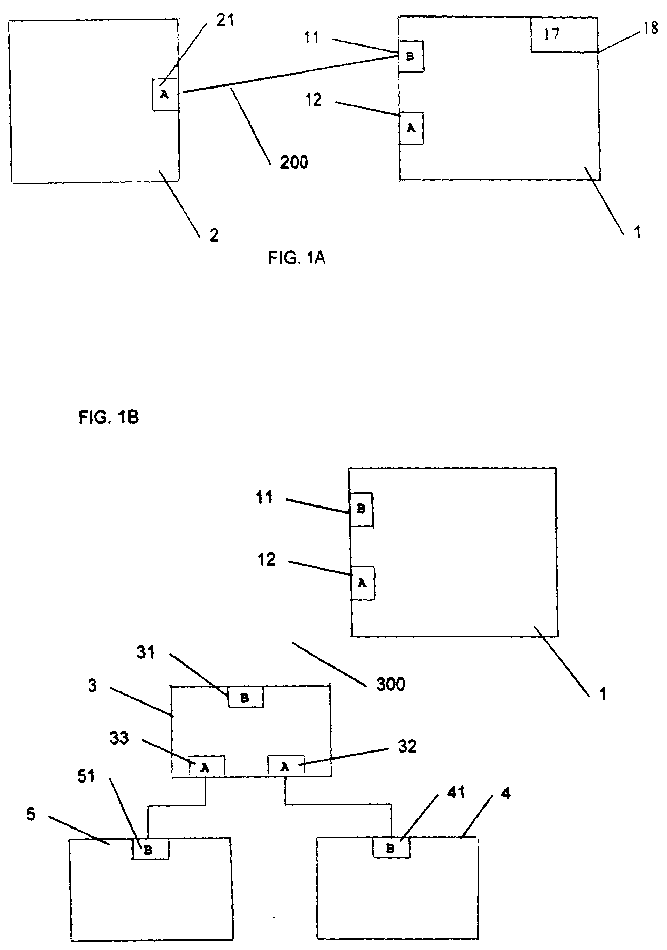

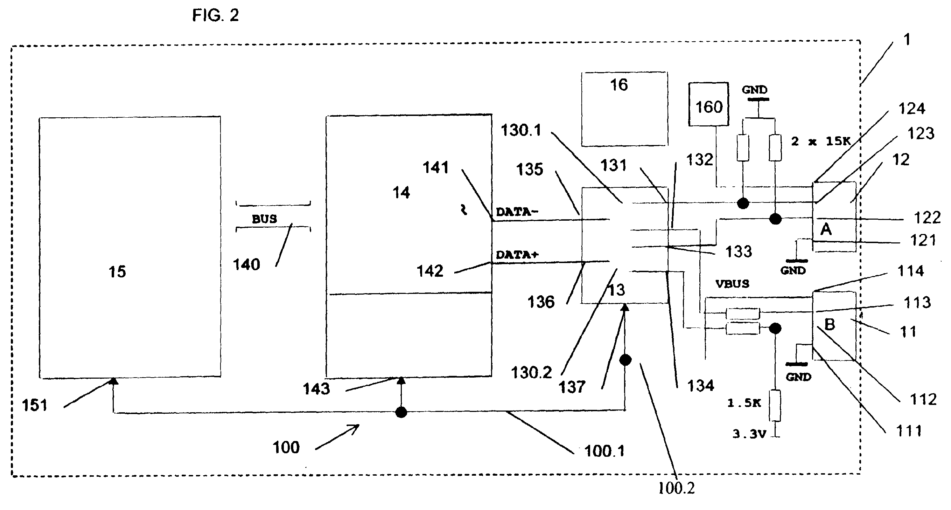

A nonlimiting embodiment of the invention will now be described with reference to Figures 1A, 1B and 2.

According to the present exemplary embodiment, the apparatus (1) for receiving an audiovisual programme, for example consisting of a digital decoder, comprises a first connector (11), for example a B type USB (Universal Serial Bus) connector. The B type USB connector allows, according to Figure 1A, the connection of a master apparatus (2) which will be the master of the USB bus between the decoder (1) and the apparatus (2). The master apparatus (2) is, for example, a portable or nonportable personal computer, then comprising an A type USB connector (21) to cater for the link by way of a USB cable (200) between the computer (2) and the decoder (1). In this configuration, the decoder (1) behaves as a slave apparatus of the computer (2). This configuration allows:
- on the one hand a fast link with a bit rate of 12 megabits between the personal computer (2) and the decoder (1) via the USB cable,
- and on the other hand, through a circuit (17) by way of the specific cable (18) linking the return pathway of the decoder to the service of the server of the operator, a link of high bit rate (several megabits per second) of the computer (2) with the operator and possibly through the latter to the Internet network.

Thus, the decoder (1) can be used by the computer (2) as a modem for the bidirectional cabled network to which the decoder (1) is connected. Another use of this configuration allows, for example, decoder file management or the introduction of information to be overlayed onto the images or else more sophisticated interactivity between the user of the computer, of the decoder and the server centre of the operator.

According to the present exemplary embodiment, the decoder (1) comprises at least one second connector (12), for example, an A type USB connector. Each A type USB connector allows, according to the configuration represented in Figure 1B, connection of a peripheral apparatus to the decoder (1) by way of a USB cable. According to the configuration represented in Figure 1B, the decoder (1) comprises a single A type USB connector (12). To connect several items of peripheral apparatus to the decoder (1) it is sufficient to connect a splitter (3) (also known as a "hub") of USB type to the A type connector (12) of the decoder by way of a USB cable (300). The splitter (3) then comprises a B type USB connector (31) for linking the decoder and at least two A type USB connectors (32, 33). Each A type connector (32, 33) is used to connect a peripheral apparatus (4, 5). Thus, a first peripheral apparatus consisting, for example, of a scanner (4) comprises a B type USB connector (41) to cater for its connection to one of the A type connectors (32) of the splitter (3). A second peripheral apparatus consisting, for example, of a printer (5) comprises a B type USB connector (51) to cater for its connection to the A type free connector (33) of the splitter (3).

According to the present exemplary embodiment, by way of minor modifications to the decoder (1) consisting in particular in adding the A and B type USB connectors (11, 12), the decoder (1) can, therefore, in addition to its main decoding function, carry out other ancillary functions such as managing peripheral apparatus or allowing the connection to the Internet of a computer (2) to which the latter is connected.

According to the prior art, the USB connectors of a computer system are managed by a USB controller which operates either in master mode or in slave mode. Consequently, according to Figure 2, the decoder (1) according to the invention also comprises a USE controller (14) connected on the one hand, as described later, to the A or B type USB connectors (11, 12) of the decoder (1), and on the other hand, by a bus (140), to the main microprocessor (15) of the decoder (1). As explained earlier, the controller (14) can operate in only one of its two modes, either the master mode or the slave mode. According to the invention a single one of two types of USB connector of the decoder (1) can be used.

The feature of a B type USB connector is that it comprises a pin intended to receive a supply provided, through the A type USB connector, by the master device of the USB bus. The slave device receives the supply voltage.

According to the present exemplary embodiment, the change of mode of operation of the USB controller (14) and hence of the decoder is carried out by monitoring the appearance of the supply voltage arriving on the B type connector (11) of the decoder (1). The decoder (1) comprises a link (100.1, 100.2) for transporting a signal serving to detect the supply voltage linked to the B type connector (11) and switching means (13) intended to change the mode of operation of the decoder (1) by going from the master mode of operation to the slave mode of operation when a supply voltage appears, and in which the apparatus (1) behaves as a slave apparatus in relation to the master apparatus generating the supply voltage.

Each USB connector (11, 12) comprises four pins (111 to 114, 121 to 124). A first pin (111, 121) is linked to earth, a second and a third pin (112, 113, 122, 123) are used to transmit the signals representative of the data and the fourth pin (114, 124) is intended for the electrical supply of the USB bus. According to the present exemplary embodiment, the second and third pins (112, 113, 122, 123) of each USB connector (11, 12) of the decoder are each linked to an output pair (131 to 134) of a switching circuit (13), two inputs (135, 136) of which are linked to two inputs/outputs (141, 142) of the USB controller (14). The two inputs/outputs (141, 142) of the USB controller (14) convey the data of the USB controller (14).

According to the prior art, a master device which controls a USB bus must provide a supply voltage (VBUS), the fourth pin (124) of the A type connector (12) is linked to a device (16) for generating the supply current of the USB bus incorporated in the apparatus (1). The line between the fourth pin (124) of the A type connector (12) and the supply voltage generating device (16) also comprises means (160) of protection of the supply voltage generating device (16) against short-circuits. These means (160) of protection consist of an MIC2525 component marketed by the company MICREL.

The USB controller (14) is, for example, an SL8111H component marketed by the company SCANLOGIC.

The switching circuit (13) comprises, for example, two switches (130.1, 130.2) with two positions. In a first position, the second and the third pins (112, 113) of the B type USB connector (11) are connected to the two inputs/outputs (141, 142) of the USB controller (14), this making it possible to route the data from the controller (14) to the B type connector (11). In a second position of the switches (130.1, 130.2), the second and the third pins (122, 123) of the A type USB connector (12) are connected to the two inputs/outputs (141, 142) of the USB controller (14), this making it possible to route the data from the controller (14) to the A type connector (12). The change of mode of operation of the apparatus (1) which causes the two switches (130.1, 130.2) to go from one position to another is triggered by the detection signal resulting from the appearance of the USB bus supply voltage. This signal is provided by a first line (100.1, 100.2) connected on the fourth pin (114) of the B type connector (11). This pin (114) is therefore intended to receive the BUS supply voltage (VBUS) generated by a master apparatus equipped with an A type USB connector. This first line (100.1) is connected, firstly to an input (137) of the switching circuit (13), secondly to an input (143) of the USB controller (14) and thirdly to an input (151) of the main processor (15) of the decoder (1). This first line (100.1) is intended to transmit to the switching circuit (13) a signal representative of the appearance of a supply voltage (VBUS) on the fourth pin (114) of the B type connector (11) of the decoder (1). The signal representative of the voltage can be either the voltage itself or a high or low signal interpreted by the switching circuit (13), the USB controller (14) and the main microprocessor (15) as the signal of the appearance of the supply voltage (VBUS).

According to the present exemplary embodiment, as soon as a supply voltage appears on the fourth pin (114) of the B type USB connector (11) and as long as this voltage exists, the first line (100.1) transmits the signal to the input (137) of the switching circuit (13) so that the two switches (130.1, 130.2) toggle and remain in the first position represented as a solid line so as to connect the second and the third pins (112, 113) of the B type USB connector (11) to the two inputs/outputs (141, 142) of the USB controller (14). The reception of a signal representative of the appearance of a supply voltage (VBUS) on the B type connector (11), on the input of the USB controller (14), by way of the first line (100.1), triggers the switching of the USB controller (14) into the slave mode by the input (143). Likewise, the reception of a signal representative of the appearance of a supply voltage (VBUS) on the B type connector (11), by way of the first line (100.1), on the input (151) of the main microprocessor (15) triggers a procedure for the hardware and software configuration of the decoder (1) into the slave mode deactivating the supply voltage generating device (16).

As soon as the supply voltage (VBUS) disappears, the first line (100.1) transmits the corresponding cue to the switching circuit (13) so that the two switches (130.1, 130.2) toggle into the second position, represented by dotted lines, so as to connect the second and third pins (122, 123) of the A type USB connector (12) to the two inputs/outputs (141, 142) of the USB controller (14). The disappearance of the signal representative of the appearance of a supply voltage (VBUS) on the B type connector (11), on the input of the USB controller (14) triggers the switching of the USB controller (14) into the master mode. Likewise, the disappearance of the signal representative of a supply voltage (VBUS) on the B type connector (11), on the input of the main microprocessor (15) triggers a procedure for the hardware and software configuration of the decoder (1) into the master mode and activates the device (16) for generating a supply voltage for the A type connector (12).

Thus, by default, that is to say when the decoder (1) is not connected by way of a USB link to a master apparatus (2), the decoder (1) can control at least one peripheral apparatus (4, 5) regarded as slave, it thus behaves as a master device. In this mode, the hardware and software configuration of the decoder (1) makes it possible, for example, to print on the printer (5) connected to the decoder (1), an image scanned with the aid of a scanner (4) also connected to the decoder (1).

As soon as a master apparatus, such as a computer (2) is connected and/or turned on, the decoder is automatically configured in the slave mode of operation. In this mode, the decoder can behave as a modem in relation to the computer so as to allow, for example, connection to the Internet via the return channel of the decoder (1). However, in this mode the B type connector (11) is unusable. Consequently, no operation is possible on the peripheral apparatuses (4, 5) connected to the decoder (1).

It should be obvious to persons versed in the art that the present invention allows embodiments under numerous other specific forms without straying from the field of application of the invention as claimed. Consequently, the present embodiments must be regarded by way of illustration but may be modified within the field defined by the scope of the attached claims.

In particular, the invention is not limited to television decoders but may be applied to any communication device linkable to a cabled bus.

## Claims

1. Apparatus (1) for receiving an audiovisual programme comprising a circuit for communication with means of connection to a bidirectional communication network, **characterised in that** the apparatus (1) comprises
- a first connector (11) for communication with a master apparatus (2);
- a second connector (12) for communication with a peripheral apparatus (4, 5);
- a means of transmission of a supply voltage (VBUS) on the first connector originating from the master apparatus (2);
- means (100) of detection of the presence of the supply voltage (VBUS) on the first connector (11), the means of detection (100) controlling a switching circuit (13) for going from a master mode of operation of the apparatus (1) in relation to the peripheral apparatus (4, 5) in the case of the absence of the voltage (VBUS), and from a slave mode of operation in relation to the master apparatus (2) when the voltage is present.

2. Apparatus (1) for receiving an audiovisual programme according to Claim 1, **characterized in that** the first connector (11) is a B type USB connector and each second connector (12) is an A type USB connector.

3. Apparatus (1) for receiving an audiovisual programme according to Claim 1 or 2, **characterized in that** the switching circuit (13) comprises two inputs (135, 136) each linked to an input/output (141, 142) of a controller (14) managing the transfer of data between the first (11) or the second (12) connector and a so-called main microprocessor (15) of the apparatus (1), the switching circuit (13) also comprises inputs/outputs (131 to 134) allowing the connection of the first and second connector (11, 12) so that either the first connector (11) is linked to the inputs/outputs (141, 142) of the controller (14), or the second connector (12) is linked to the inputs/outputs (141, 142) of the controller (14).

4. Apparatus (1) for receiving an audiovisual programme according to Claim 3, **characterized in that** the means (100, 100.1) of detection are linked, firstly to a specific input (137) of the switching circuit (13), secondly to an input (143) of the controller (14) and thirdly to an input (151) of the main microprocessor (15).

5. Apparatus for receiving an audiovisual programme according to one of Claims 1 to 4, **characterized in that** the master apparatus is a personal computer (2) and the apparatus comprises a digital decoder (1) connected to the communication network (18) so as to allow the computer to talk to said network (18).

6. Apparatus for receiving an audiovisual programme according to Claim 3 or 4, **characterized in that** the means (100) of detection comprise a line (100.1) transmitting either the supply voltage appearing on the first connector (10), or a signal representative of the appearance of the supply voltage on the first connector (10), to the switching circuit (13), the controller (14) and the main microprocessor (15).

7. Apparatus for receiving an audiovisual programme according to one of Claims 1 to 6, **characterized in that** the peripheral or peripherals (3, 4, 5) are linked to the second connector (12) of the apparatus (1) by way of a splitter (3).
